# EUROPÄISCHE PATENTSCHRIFT

(11) **EP 0 863 033 B1**
(45) Veröffentlichungstag und Bekanntmachung des Hinweises auf die Patenterteilung: **28.06.2006**
(21) Anmeldenummer: 98103238.6
(22) Anmeldetag: 25.02.1998
(51) Int. Cl.: B60J 7/185

(54) **Verschlussvorrichtung für ein Cabriolet-Verdeck**
Locking device for convertible top
Dispositif de verrouillage pour capote de voiture convertible

(30) Priorität: 03.03.1997 DE 29703774 U
(43) Veröffentlichungstag der Anmeldung: 09.09.1998
(73) Patentinhaber: Wilhelm Karmann GmbH, 49084 Osnabrück (DE)
(72) Erfinder: Baumeier, Andreas, 49191 Belm (DE)
(74) Vertreter: Busse & Busse Patentanwälte

(56) Entgegenhaltungen:
- FR-A- 2 562 480
- US-A- 3 179 458
- US-A- 4 702 505

## Beschreibung

Die Erfindung bezieht sich auf eine Verschlußvorrichtung für ein Cabriolet-Verdeck in einer Ausbildung nach dem Oberbegriff des Patentanspruches 1.

Bei Verschlußvorrichtungen dieser Art, wie sie aus der US-A-4 702 505 und der FR-A-2 562 480 bekannt sind, umgreift das Riegelorgan, das dem Cabriolet-Verdeck bzw. dem Karosserierahmenteil zugeordnet ist, ein Widerlager, um damit das Verdeck in Schließstellung an dem Karosserierahmenteil zu halten. Dabei üben die Eigenspannung des Cabriolet-Verdeckes sowie elastische Dichtungsansätze im Bereich der vorderen Verdeckkante bzw. des Karosserierahmenteils eine im Öffnungssinn des Cabriolet-Verdeckes wirkende Federkraft aus, gegen die beim Schließen des Verdeckes angearbeitet werden muß und die in Schließstellung den Eingriff zwischen Riegelorgan und Widerlager sichert.

Um eine zu große Deformation der Dichtungsansätze und eine zu starke Dehnung des Verdeckes in Schließstellung zu vermeiden und andererseits den Eingriff zwischen Riegelorgan und Widerlager frei von Spiel und damit Klappergeräuschen zu halten, müssen die jeweilige Anordnung des Riegelorgans und des Widerlagers diesen Anforderungen entsprechend exakt abgestimmt sein.

Daher ist das Widerlager gegenüber dem Karosserierahmenteil bzw. dem Cabriolet-Verdeck verstellbar ausgebildet. Dadurch kann die haltende Kraft für das Cabriolet-Verdeck derart beeinflußt werden, daß bei zu großer Deformation der Dichtungsansätze bzw. zu starker Dehnung des Verdeckes das Widerlager im Sinne einer Entspannung der Eingriffstellung zwischen diesem und dem Riegelorgan versetzt wird, wohingegen bei Auftreten von Spiel zwischen dem Riegelorgan und dem Widerlager dieses im Sinne einer Erhöhung der Haltekraft versetzt wird. Nachteilig ist bei den bekannten Lösungen jedoch, daß die Feststellung in verschiedenen Freiheitsgraden möglich ist, was nicht zu einer sicheren Fixierung führt.

Aufgabe der vorliegenden Erfindung ist, eine exakte und auch fixierbare Eingriffspositionierung zwischen Widerlager und Riegelorgan auch unter Berücksichtigung von Fertigungstoleranzen und einer Materialalterung insbesondere bei Verdeckteilen zu gewährleisten. Zur Lösung dieser Aufgabe zeichnet sich die Verschlußvorrichtung der eingangs genannten Art dadurch aus, daß an dem Widerlager bzw. einem mit diesem verbundenen Widerlagerträger ein Verzahnungsprofil angeordnet ist, das mit einem komplementären Verzahnungsprofil eines gegenüber dem Karosserierahmenteil bzw. dem Cabriolet-Verdeck ortsfest angeordneten Gegenstückes zusammenwirkt. Dadurch ist das Widerlager in verschiedenen Höhen sicher zu fixieren. Die Verzahnungsprofile greifen jeweils formschlüssig ineinander. Zusätzlich kann zur Führung der Verschiebung ein Paßsteg im Bereich der Kontaktfläche zwischen Gegenstück und Aufnahmeeinheit quer zu der Verzahnungsprofilierung angeordnet sein, wobei der Paßsteg in einer angeschrägten Richtung verlaufen kann, so daß gleichzeitig mit der vertikalen Verstellung auch eine geringfügige horizontale erfolgt, um so auch Toleranzen des Verdecks hinsichtlich seiner Ausdehnung gegenüber der Fahrzeuglängsmittelachse berücksichtigen zu können. Dadurch ist die Variabilität des Toleranzausgleiches erhöht. Weitere vorteilhafte Ausgestaltungen ergeben sich aus den Unteransprüchen sowie aus der Zeichnung und der nachfolgenden Beschreibung eines Ausführungsbeispiels. In der Zeichnung zeigen:
- Fig. 1: eine schematische Gesamtansicht einer erfindungsgemäßen Verschlußvorrichtung,
- Fig. 2: eine schaubildliche Ansicht des Widerlagerträgers und des Gegenstückes,
- Fig. 3: eine Draufsicht auf das in dem Widerlagerträger angeordnete Widerlager und das Gegenstück,
- Fig. 4: eine schematische schaubildliche Gesamtansicht von vorzugsweise im Cabriolet-Verdeck angeordneten Teilen der Verschlußvorrichtung,
- Fig. 5: eine Ansicht eines Verschlußelementes in Schließstellung,
- Fig. 6: einen Schnitt entlang der Linie V-V in Fig. 3,
- Fig. 7: einen Schnitt entlang der-Linie VI-VI in Fig. 3,
- Fig. 8: einen Schnitt entlang der Linie VII-VII in Fig. 3,
- Fig. 9: eine perspektivische Gesamtdarstellung der Aufnahmeeinheit des Widerlagers mit Widerlagerträger und Gegenstück,
- Fig. 10: eine schematische Gesamtansicht einer alternativen Verschlußvorrichtung,
- Fig. 11: eine Seitenansicht der Ausführungsform nach Fig. 10 in der Stellung bei gerade oder noch geöffnetem Verdeck,
- Fig. 12: eine Seitenansicht wie Fig. 11 bei Beginn des Schließvorganges,
- Fig. 13: eine Seitenansicht wie Fig. 11 und 12 bei in Schließstellung gebrachtem Verdeck.

Eine erfindungsgemäße Verschlußvorrichtung umfaßt entweder ein zentrales und/oder mehrere, den Seitenbereichen des Karosserierahmenteils 2,102 und des Cabriolet-Verdeckes 3,103 zugeordnete Verschlußelemente 1,101, die jeweils ein Widerlager 4,104 und ein mit diesem Widerlager in Schließstellung des Cabriolet-Verdeckes 3,103 in Eingriffsstellung stehendes Riegelorgan 5,105 aufweisen.

Das Widerlager 4,104 ist in einem Widerlagerträger 6 aufgenommen bzw. bildet einen Teil eines Widerlagerträgers 106 aus, wobei dieser oder das Widerlager 4,104 gegenüber dem Gegenstück 7,107 lageveränderlich angeordnet ist.

In Schließstellung ist das dem Karosserierahmenteil 2,102 zugeordnete Widerlager 4,104 von einem Riegelorgan 5,105 des Cabriolet-Verdeckes 3,103 umgriffen. Es versteht sich, daß umgekehrt auch das Riegelorgan am Karosserierahmenteil 2,102 und das Widerlager am Cabriolet-Verdeck 3,103 angeordnet sein kann.

Entlang einer Trennungsfuge 10,110 zwischen dem Widerlagerträger 6,106 und dem Gegenstück 7,107 weisen die beiden genannten Teile jeweils im wesentlichen horizontal verlaufende Verzahnungsprofile 8,108 bzw. 9,109 auf. Statt dessen können an der Trennfuge 10,110 auch eine besondere Oberflächenrauhigkeit für einen kraftschlüssigen Eingriff oder Mittel für einen formschlüssigen Eingriff zwischen den beiden Teilen 6,106 und 7,107 vorgesehen sein. Insgesamt muß sichergestellt sein, daß in einer einmal fixierten Relativlage des Widerlagerträgers 6,106 gegenüber dem Gegenstück 7,107 ein unbeabsichtigtes Abrutschen der Teile aufeinander verhindert ist.

Die in den Ausführungsbeispielen vorgesehenen horizontal verlaufenden Verzahnungsprofilierungen 8,108 bzw. 9,109 erstrecken sich zweckmäßig über die Gesamtbreite der Trennungsfuge 10,110.

Die Trennungsfuge 10,110 ist Teil einer im wesentlichen vertikalen Ebene, so daß das Widerlager 4,104 hinsichtlich seiner vertikalen Ausrichtung gegenüber dem Karosserierahmenteil 2,102 verstellbar ist. Durch eine Neigung der Trennungsfuge 10,110 kann eine zusätzliche Komponente der Verstellbarkeit in Fahrzeuglängsrichtung hinzukommen, so daß nicht nur die Spannung der vorderen Verdeckkante 11,111 in vertikaler Richtung, sondern auch ihre Lage in Richtung der Fahrzeuglängsachse eingestellt bzw. nachgespannt werden kann.

Zusätzlich kann gleichzeitig mit einer vertikalen Verstellung in der Ebene der Trennungsfuge 10,110 auch eine geringe horizontale Verstellung in Richtung der Fahrzeugquerachse vorgenommen werden, so daß gleichzeitig mit der vertikalen Nachspannung auch jeweils ein leichtes Verstellen bzw. Nachspannen des Verdecks in seitliche Richtung erfolgt.

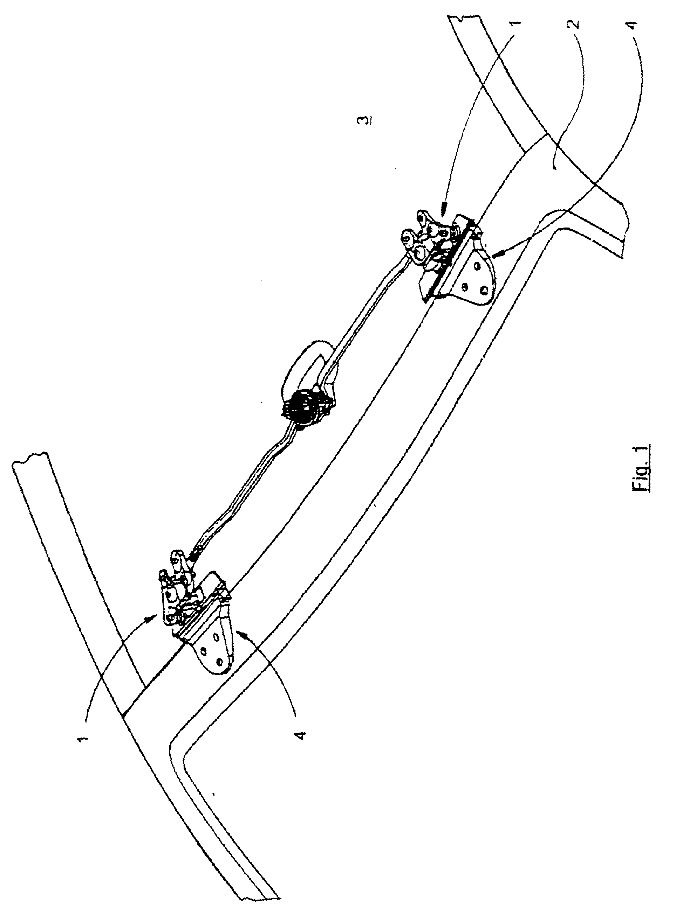

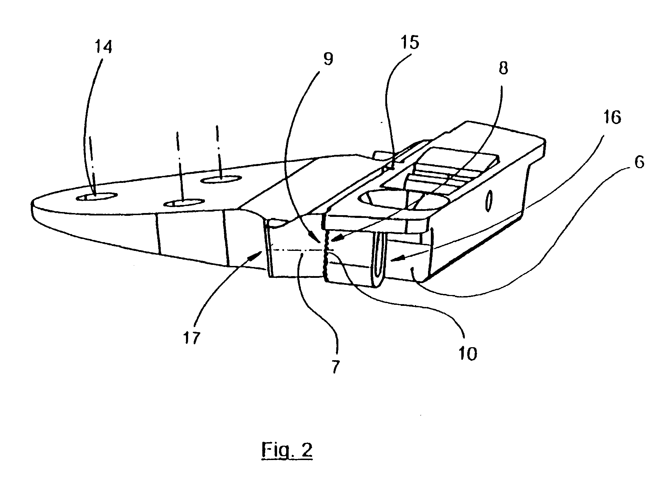

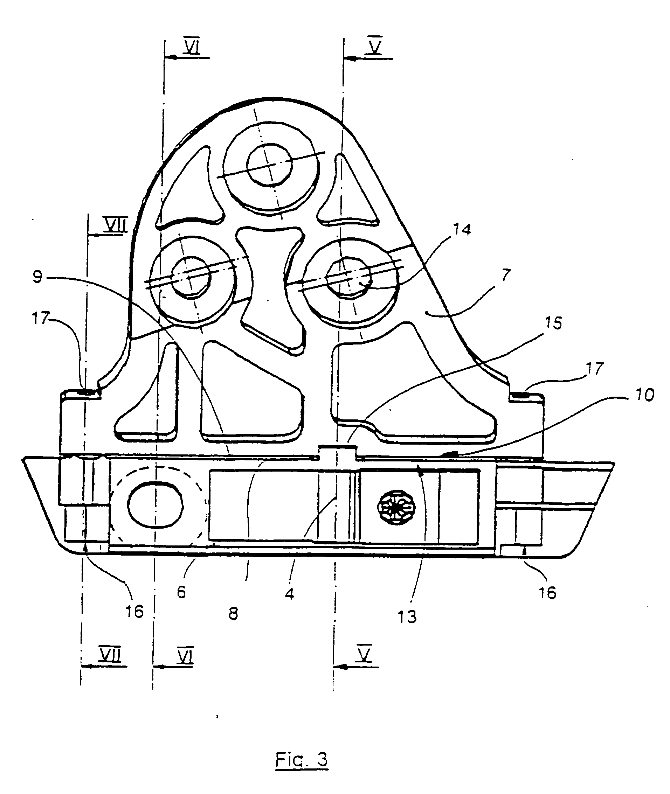

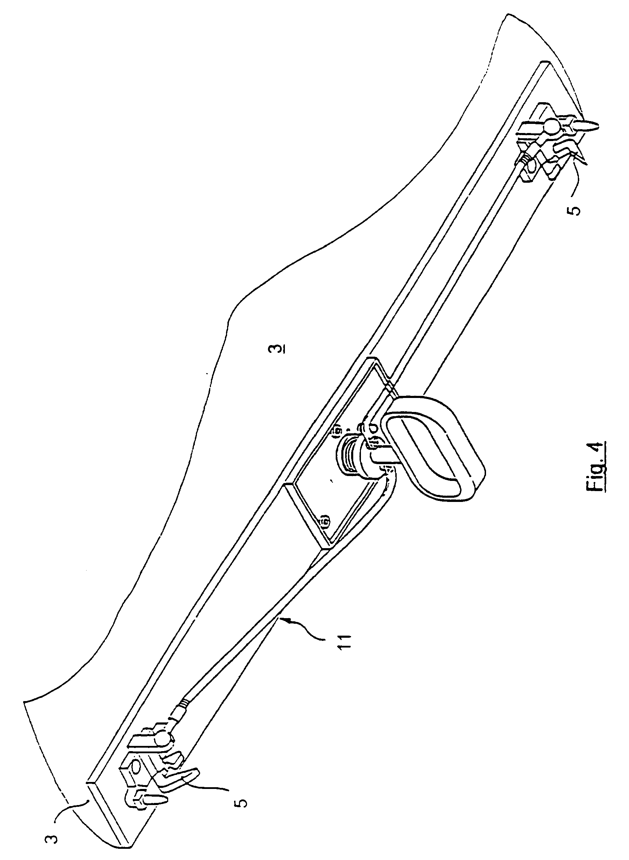

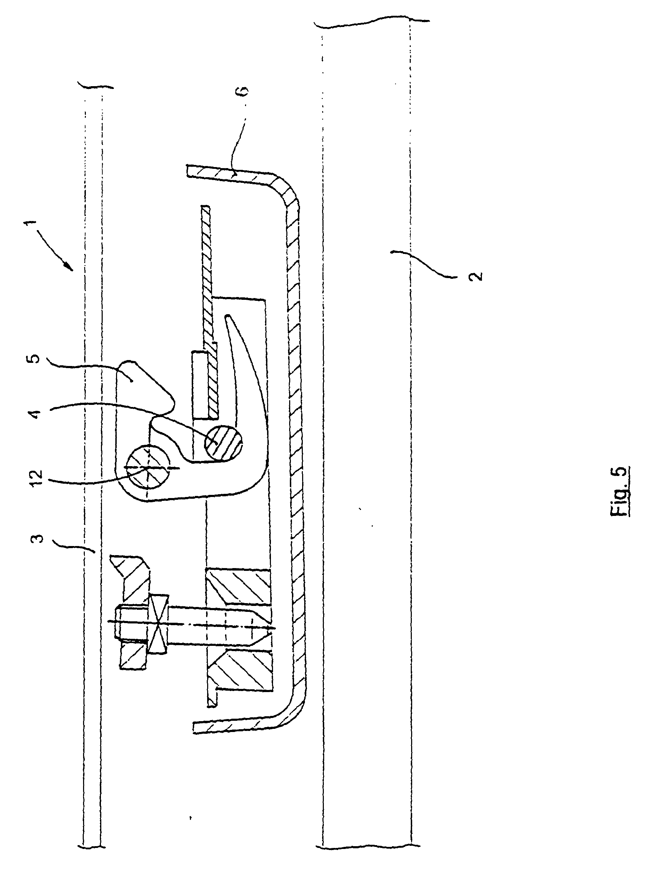

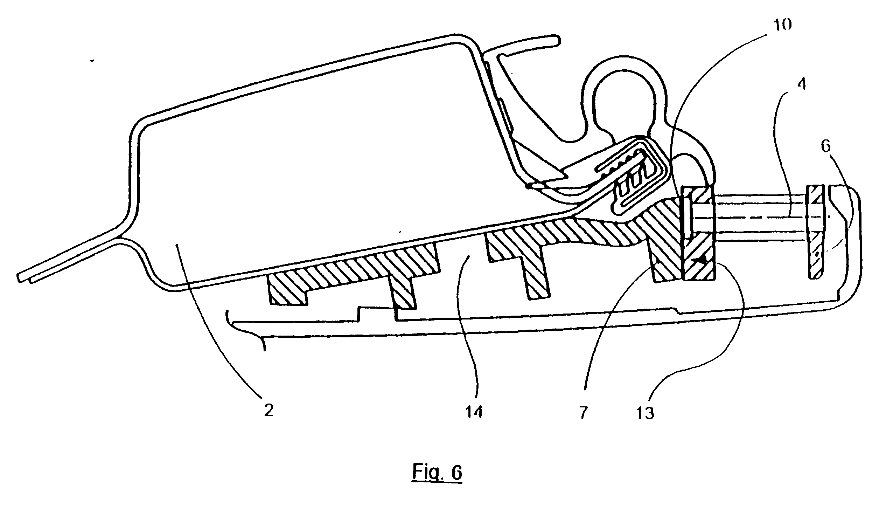

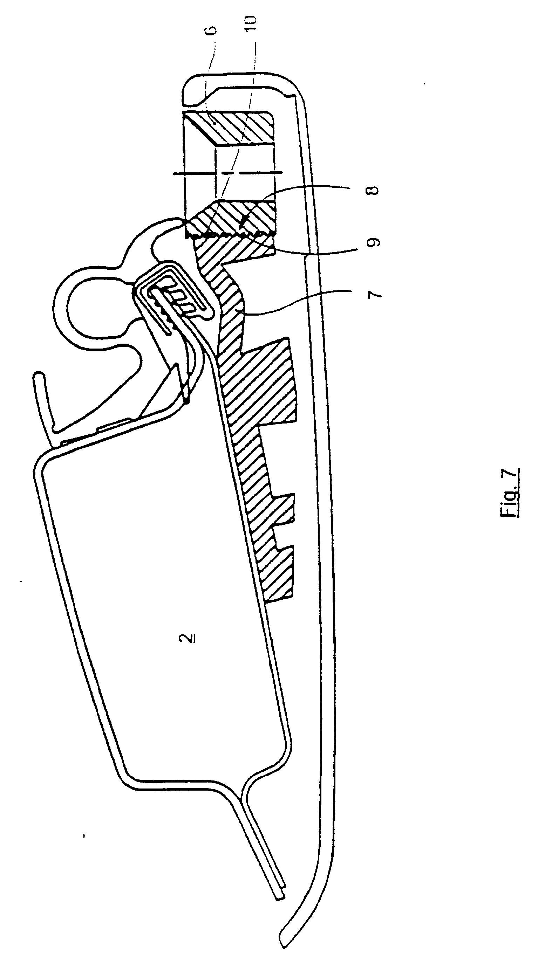

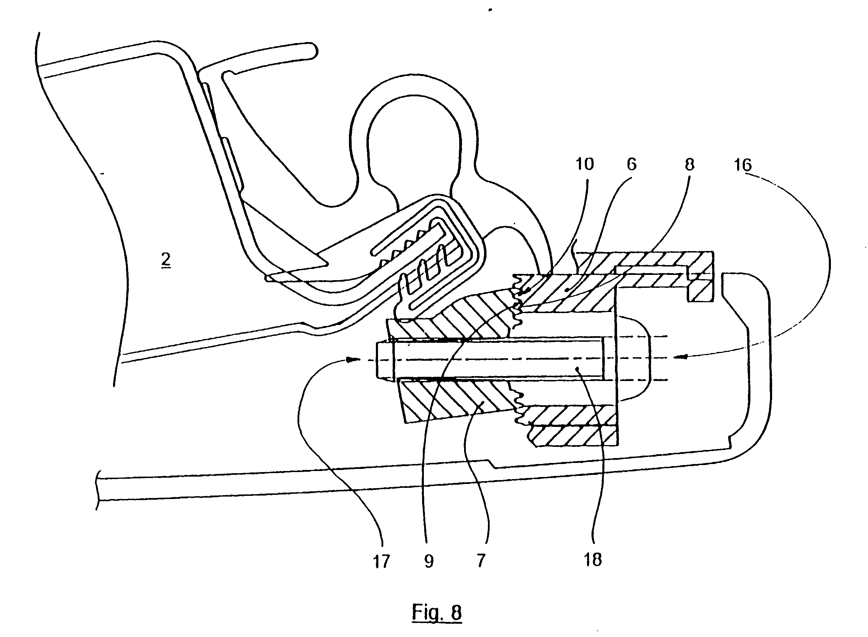

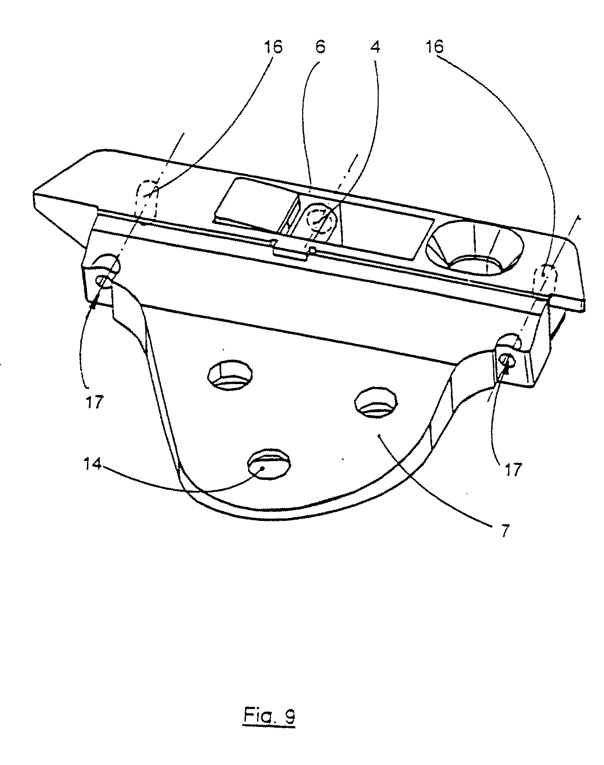

In einem ersten Ausführungsbeispiel (Fig. 1 bis 9) ist das Widerlager 4 als parallel zur Fahrzeuglängsachse verlaufender, von einer drehbaren Hülse umgriffener Rundsteg ausgebildet, der von einem Riegelorgan 5, das um eine in Fahrzeuglängsrichtung verlaufende Schwenkachse 12 schwenkbar ist, in Schließstellung umgriffen wird. Das Widerlager 4 ist in einem Widerlagerträger 6 aufgenommen, der dem Karosserierahmenteil 2 zugeordnet ist. Dieser Widerlagerträger 6 steht entlang seiner vorderen Seitenfläche 13, die mit einer horizontal verlaufenden Rastprofilierung 8 versehen ist, in Kontakt mit einem Gegenstück 7, das über Bohrungen 14 durchgreifende Befestigungselemente mit dem Karosserierahmenteil 2 verbunden ist.

Im Bereich der Trennungsfuge 10 zwischen dem Widerlagerträger 6 und dem Gegenstück 7 ist zudem ein Paßsteg 15 angeordnet, der im wesentlichen quer zu der Rastprofilierung 8,9 verläuft und in eine komplementäre Aussparung des Gegenstückes 7 eingreift. Dadurch ist gesichert, daß auch bei Lösen der die jeweilige Relativlage von Widerlagerträger 6 und Gegenstück 7 sichernden Befestigungselemente eine Verschiebung des Widerlagerträgers 6 nur entlang der durch den Paßsteg 15 und die Aussparung vorgegebenen Richtung erfolgen kann. Ein Verkanten der Teile gegeneinander ist dabei ausgeschlossen.

Zur Fixierung einer jeweils eingestellten Relativlage zwischen dem Widerlagerträger 6 und dem Gegenstück 7 dienen den Widerlagerträger 6 in Durchgangsbohrungen 16 durchgreifende Befestigungselemente 18, die in Bohrungen 17 des Gegenstücks eingreifen. Diese Befestigungselemente 18 sind zweckmäßig als Schrauben und die Bohrungen 16 als Langlöcher ausgebildet, entlang deren quer zur Verzahnungsprofilierung 8,9 ausgerichteten Längserstreckung der Widerlagerträger 6 gegenüber dem Gegenstück 7 verschieblich ist. Anstelle von in Langlöchern geführten Schrauben kommen auch andere Befestigungselemente 18 in Frage, beispielsweise Federelemente, die in verschiedenen Rastpositionen einrasten, oder Exzenter, über die die Relativverschiebung bewirkt wird, oder klinkenartig in stufenweise versetzte Ausnehmungen eingreifende Riegelelemente o. dgl. Je nach Ausbildung können die Befestigungselemente 18 am Widerlager 4,104 bzw. Widerlagerträger 6,106 oder dem Gegenstück 7,107 fest angeordnet sein.

Die Längsausdehnung der Langlöcher 16 liegt parallel zu der Längserstreckung des Paßsteges 15. Bei paralleler Schrägstellung des Paßsteges 15 und der Langlöcher 16 erfolgt die Verstellbarkeit des Widerlagerträgers 6 nicht allein vertikal, sondern enthält auch eine horizontale Komponente in Richtung Fahrzeugquerachse, wobei der obere Bereich der Langlöcher 16 der Fahrzeugmitte zugewandt ist, wohingegen der untere Bereich nach außen weist, so daß bei einer Abwärtsverlagerung des Widerlagerträgers 6 dieser auch gleichzeitig ein wenig nach außen gezogen werden kann, um auch eine seitliche Spannung des Cabriolet-Verdeckes 3 zu erhöhen.

Anstelle der mit der vertikalen Verstellung gekoppelten leichten horizontalen Verstellbarkeit durch die schräge Anordnung von Paßsteg 15 und Langlöchern 16 kann auch ein Zwischenstück zwischen dem Gegenstück 7 und dem Widerlager 4,104 bzw. Widerlagerträger 6,106 angeordnet sein - nicht gezeichnet -, das einseitig mit einer horizontalen und an seiner gegenüberliegenden Seite mit einer vertikalen Rastprofilierung versehen ist, so daß eine horizontale und eine vertikale Verstellung des Widerlager 4,104 bzw. Widerlagerträgers 6,106 gegenüber dem Gegenstück 7,107 unabhängig voneinander durchgeführt werden können.

Abweichend von der zeichnerischen Darstellung, kann auch das Widerlager 4 an sich höhenverstellbar in dem Widerlagerträger 6 angeordnet sein, beispielsweise in einer mehrstufigen Kulisse geführt.

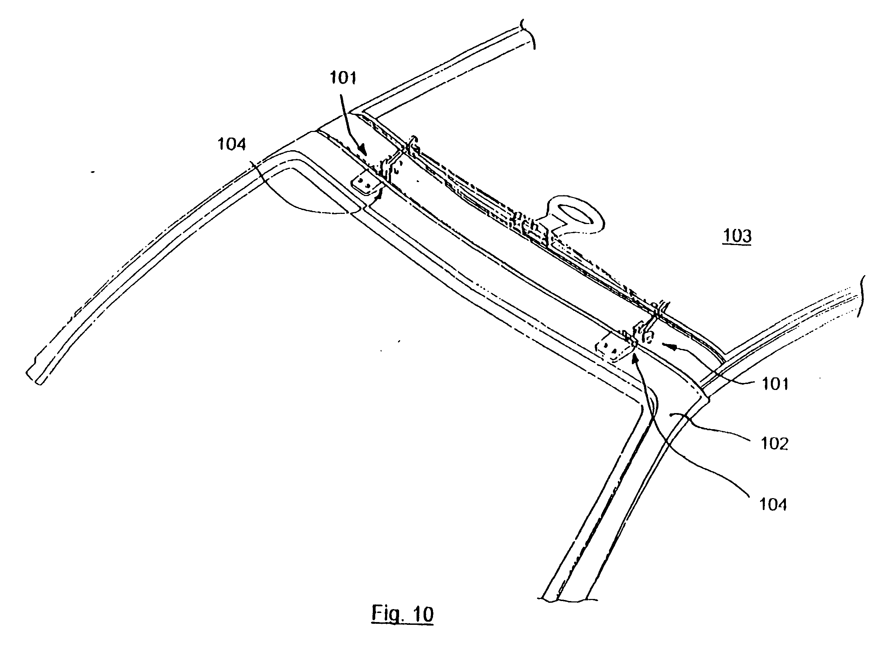

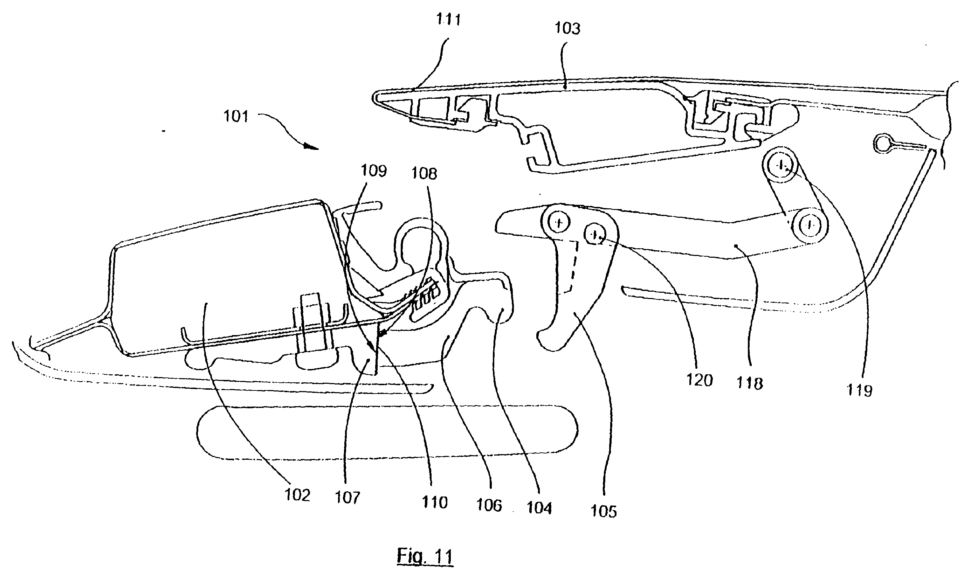

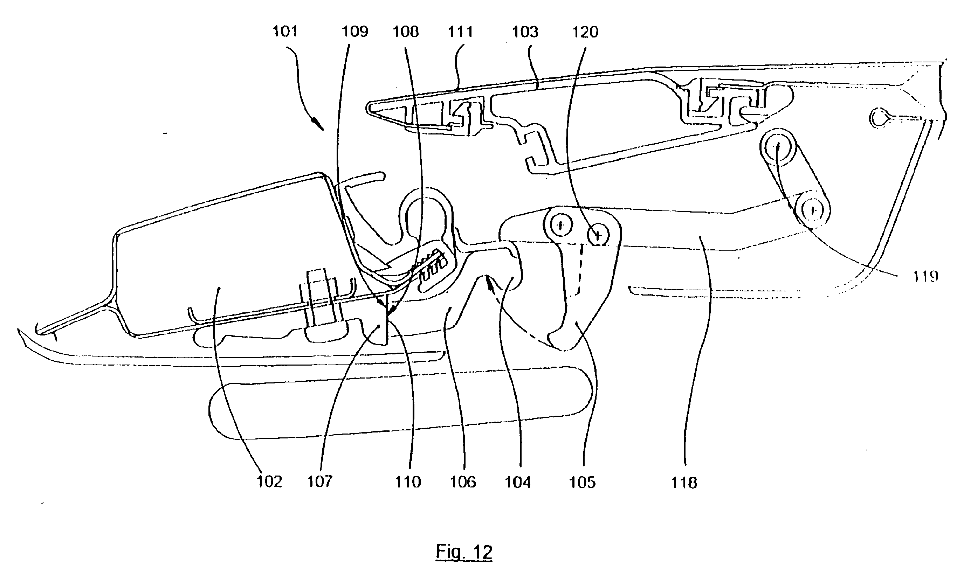

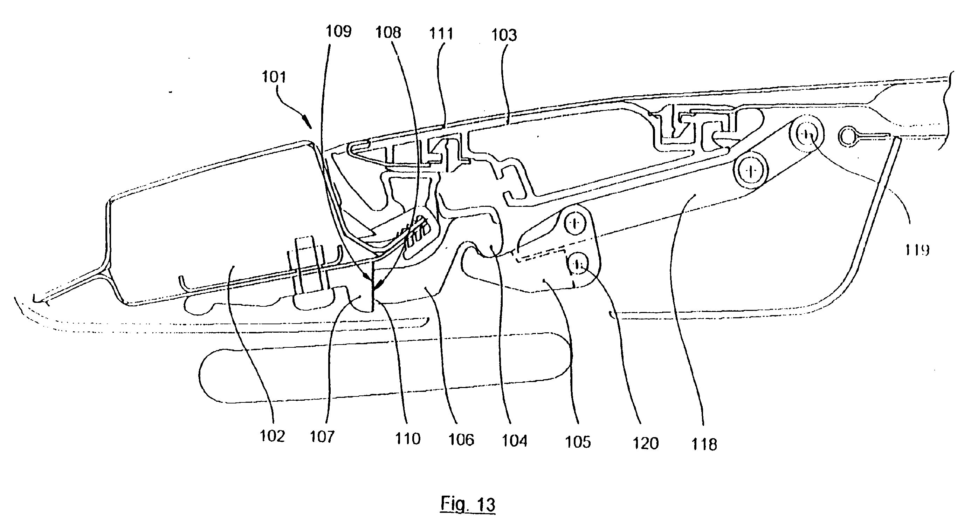

In einem zweiten Ausführungsbeispiel (Fig. 10 bis 13) ist das Widerlager 104 einstückig mit dem Widerlagerträger 106 verbunden, der insgesamt gegenüber einem Gegenstück 107 höhenverstellbar angeordnet ist, wobei im Bereich der Trennungsfuge 110 zwischen dem Widerlagerträger 106 und dem Gegenstück 107 in gleicher Weise im wesentlichen horizontal verlaufende Rastprofilierungen 108 und 109 angeordnet sind. Auch bei diesem Ausführungsbeispiel ist das Widerlager 104 dem Karosserierahmenteil 102 zugeordnet, eine umgekehrte Anbringung am Verdeck ist aber, wie schon oben bemerkt, ohne weiteres möglich.

Das das Widerlager 104 umgreifende Riegelorgan 105 ist als Teil eines Viergelenks 118 ausgebildet, das um zwei parallel zur Fahrzeugquerachse liegende Schwenkachsen 119 und 120 verschwenkbar ist.

Die Festlegung einer Höhenpositionierung des Widerlagerträgers 106 gegenüber dem Gegenstück 107 erfolgt in analoger Weise wie beim ersten Ausführungsbeispiel: Wieder sind Langlöcher angeordnet, die von Befestigungselementen durchgriffen werden (nicht gezeichnet), wobei bei Fixierung dieser Befestigungselemente die Lage der beiden Teile zueinander nicht verschieblich ist und erst nach Lösung dieser Befestigungselemente, insbesondere Schrauben, die Teile gegeneinander bewegt werden können, insbesondere wieder durch einen Paßsteg geführt, um hierdurch ein Verkanten zu unterbinden und die Richtung der Verschiebung zu bestimmen.

Neben Viergelenkanordnungen 118, die um parallel zur Fahrzeugquerachse liegende Schwenkachsen 119 und 120 beweglich sind, können selbstverständlich auch übliche Schwenkhaken, die um eine parallel zur Fahrzeugquerachsen liegende Schwenkachse beweglich sind, in Verbindung mit der Erfindung eingesetzt werden.

Insgesamt ist die Erfindung überall dort einsetzbar, wo ein Widerlager von einem Riegelorgan hintergriffen wird und dadurch eine Haltekraft für das Cabriolet-Verdeck bewirkt wird. Die Anzahl der Verschlußelemente sowie die Anordnung der Widerlager quer oder längs zur Fahrzeuglängsachse kann dabei je nach Anforderungen ausgewählt werden.

## Patentansprüche

1. Verschlußvorrichtung für ein an einem Karosserierahmenteil (2;102) lösbar festlegbares Cabriolet-Verdeck (3;103) von insbesondere Kraftfahrzeugen, mit zumindest einem Verschlußelement (1;101) zur Verbindung des Cabriolet-Verdecks (3;103) mit dem Karosserierahmenteil (2;102), wobei das Verschlußelement (1;101) jeweils zumindest ein mit einem Widerlager (4;104) in Eingriffs- bzw. Außereingriffsstellung bewegbares Riegelorgan (5;105) umfaßt, das in Schließstellung des Cabriolet-Verdeckes (3;103) das Widerlager (4;104) zumindest bereichsweise umgreift und **dadurch** eine das Cabriolet-Verdeck (3;103) an dem Karosserierahmenteil (2;102) spannende Haltekraft ausübt, wobei das Widerlager (4; 104) zur Beeinflussung der im wesentlichen vertikalen Haltekraft gegenüber dem Karosserierahmenteil (2;102) bzw. dem Cabriolet-Verdeck (3;103) hinsichtlich seiner vertikalen Ausrichtung verstellbar ist, **dadurch gekennzeichnet, daß** an dem Widerlager (4;104) bzw. einem mit diesem verbundenen Widerlagerträger (6;106) ein Verzahnungsprofil (8; 108) angeordnet ist, das mit einem komplementären Verzahnungsprofil (9;109) eines gegenüber dem Karosserierahmenteil (2;102) bzw. dem Cabriolet-Verdeck (3;103) ortsfest angeordneten Gegenstückes (7;107) zusammenwirkt.

2. Verschlußvorrichtung nach Anspruch 1, **dadurch gekennzeichnet, daß** das Widerlager (4; 104) dem Karosserierahmenteil (2; 102) zugeordnet ist.

3. Verschlußvorrichtung nach einem der Ansprüche 1 oder 2, **dadurch gekennzeichnet, daß** quer zur Verzahnungsprofilierung (8,9;108,109) ein Paßsteg (15;115) im Bereich einer Kontaktfläche (10;110) zwischen Gegenstück (7;107) und Widerlagerträger (6;106) angeordnet ist, der in eine komplementäre Ausformung des Gegenstücks (7;107) bzw. des Widerlagerträgers (6;106) eingreift.

4. Verschlußvorrichtung nach Anspruch 3, **dadurch gekennzeichnet, daß** der Paßsteg (15;115) in einer gegenüber der Verzahnungsprofilierung (8,9; 108,109) schrägen Richtung verläuft.

5. Verschlußvorrichtung nach einem der Ansprüche 1 bis 4, **dadurch gekennzeichnet daß** eine Fixierung des Verstellbaren Widerlagers über in das Widerlager (4;104) bzw. dessen Widerlagerträger (6;106) und das Gegenstück (7;107) eingreifende Befestigungselemente (18) erfolgt.

6. Verschlußvorrichtung nach Anspruch 5, **dadurch gekennzeichnet, daß** die Befestigungselemente (18) als Schrauben ausgebildet sind und den Widerlagerträger (6;106) bzw. das Widerlager (4;104) durchgreifen.

7. Verschlußvorrichtung nach Anspruch 6, **dadurch gekennzeichnet, daß** der Widerlagerträger (6;106) bzw. das Widerlager (4;104) im Bereich der Schrauben Langlöcher (16;116) aufweisen, die im wesentlichen quer zur Verzahnungsprofilierung (8; 108) ausgerichtet sind.

8. Verschlußvorrichtung nach Anspruch 7, **dadurch gekennzeichnet, daß** sich die Langlöcher (16;116) schräg zur vertikalen Achse erstrecken, wobei der obere Bereich der Langlöcher der Fahrzeugmitte zu- und der untere dieser abgewandt ist und daß sich der gegebenenfalls vorhandene Paßsteg (15;115) parallel dazu erstreckt.

9. Verschlußvorrichtung nach einem der Ansprüche 1 bis 8, **dadurch gekennzeichnet, daß** das Widerlager (4) als im wesentlichen parallel zur Fahrzeuglängsachse verlaufender Steg ausgebildet ist, der in einem sich quer zu diesem erstrekkenden Widerlagerträger (6) aufgenommen ist, wobei der Widerlagerträger (6) entlang einer Seitenfläche (13) in Kontakt mit dem Gegenstück (7) steht.

10. Verschlußvorrichtung nach einem der Ansprüche 1 bis 9, **dadurch gekennzeichnet, daß** das Widerlager (104) als im wesentlichen parallel zur Fahrzeugquerachse verlaufender Steg ausgebildet ist, der einstückig mit dem Widerlagerträger (106) verbunden ist.

## Claims

1. Locking arrangement for a convertible-vehicle folding top (3, 103) of, in particular, motor vehicles, which convertible-vehicle folding top (3, 103) can be releasably locked to a frame part (2, 102) of the bodywork, having at least one locking element (1, 101) for connecting the convertible-vehicle folding top (3, 103) to the frame part (2, 102) of the bodywork, each locking element (1, 101) comprising at least one lock-bolt member (5, 105) able to be moved to positions in which it is respectively engaged with and disengaged from at least one abutment (4, 104), which lock-bolt member (5, 105) fits round the abutment (4, 104), at least in a region or regions, when the convertible-vehicle folding top (3, 103) is in the raised position and thus exerts a retaining force which clamps the convertible-vehicle folding top (3, 103) to the frame part (2, 102) of the bodywork, the abutment (4, 104) being adjustable in respect of its vertical positioning to allow the retaining force, which is substantially vertical, to be acted on in relation to the frame part (2,102) of the bodywork or to the convertible-vehicle folding top (3, 103), as the case may be, **characterised in that** there is arranged on the abutment (4, 104) or on an abutment support (6, 106) connected thereto a toothed profiling (8, 108) which co-operates with complementary toothed profiling (9, 109) belonging to a mating part (7, 107), which mating part (7, 107) is arranged in a fixed position relative to the frame part (2, 102) of the bodywork or to the convertible-vehicle folding top (3, 103), as the case may be.

2. Locking arrangement according to claim 1, **characterised in that** the abutment (4, 104) is associated with the frame part (2, 102) of the bodywork.

3. Locking arrangement according to either of claims 1 and 2, **characterised in that** a fitted ridge (15, 115), which engages in a complementarily shaped part of the mating part (7, 107) or the abutment support (6, 106), as the case may be, is arranged in the region of a contact surface (10, 110) between the mating part (7, 107) and the abutment support (6, 106)

4. Locking arrangement according to claim 3, **characterised in that** the fitted ridge (15, 115) extends in a direction which is transverse to the toothed profiling (8,9; 108, 109).

5. Locking arrangement according to one of claims 1 to 4, **characterised in that** the adjustable abutment is fixed in place by means of fastening members (18) which engage in the abutment (4, 104), or in the latter's abutment support (6, 106), and the mating part (7, 107).

6. Locking arrangement according to claim 5, **characterised in that** the fastening members (18) are in the form of screws and pass through the abutment support (6, 106) or the abutment (4, 104).

7. Locking arrangement according to claim 6, **characterised in that** the abutment support (6, 106) or the abutment (4, 104) has, in the region of the screws, slotted holes (16, 116) which are aligned substantially transversely to the toothed profiling (8, 108).

8. Locking arrangement according to claim 7, **characterised in that** the slotted holes (16, 116) extend obliquely to the vertical axis, the upper region of the slotted holes being adjacent the centre of the vehicle and the lower region thereof being remote from the centre of the vehicle, and **in that** the fitted ridge (15, 115) which may possibly be present extends parallel thereto.

9. Locking arrangement according to one of claims 1 to 8, **characterised in that** the abutment (4) is in the form of a member which extends substantially parallel to the longitudinal axis of the vehicle and which is held in an abutment support (6) which extends transversely to said member, the abutment support (6) extending in contact with the mating part (7) along a side face (13).

10. Locking arrangement according to one of claims 1 to 9, **characterised in that** the abutment (104) is in the form of a member which extends substantially parallel to the transverse axis of the vehicle and is connected to the abutment support (106) in one piece therewith.

## Revendications

1. Dispositif de verrouillage pour une capote de cabriolet (3 ; 103) pouvant être fixée de manière amovible à un cadre de carrosserie (2 ; 102) en particulier de véhicules automobiles, comprenant au moins un élément de verrouillage (1 ; 101) pour relier la capote de cabriolet (3 ; 103) au cadre de carrosserie (2 ; 102), l'élément de verrouillage (1 ; 101) comprenant respectivement au moins un verrou (5 ; 105) mobile dans une position engagée ou désengagée avec une contre-butée (4 ; 104) et entourant la contre-butée (4 ; 104) au moins partiellement en position de fermeture de la capote de cabriolet (3 ; 103), exerçant ainsi une force de retenue qui serre la capote de cabriolet (3 ; 103) sur le cadre de carrosserie (2 ; 102), la contre-butée (4 ; 104) étant réglable en orientation verticale pour influencer la force de retenue essentiellement verticale par rapport au cadre de carrosserie (2 ; 102) ou à la capote de cabriolet (3 ; 103),
**caractérisé en ce que**
sur la contre-butée (4 ; 104) ou sur un support de contre-butée (6 ; 106) relié à celle-ci, on dispose un profilé denté (8 ; 108) qui coopère avec un profilé denté complémentaire (9 ; 109) d'un élément antagoniste (7 ; 107) disposé de manière fixe par rapport au cadre de carrosserie (2 ; 102) ou à la capote de cabriolet (3 ; 103).

2. Dispositif de verrouillage selon la revendication 1,
**caractérisé en ce que**
la contre-butée (4 ; 104) est associée au cadre de carrosserie (2 ; 102).

3. Dispositif de verrouillage selon l'une quelconque des revendications 1 ou 2,
**caractérisé en ce que**
transversalement au profilé denté (8, 9 ; 108, 109), on dispose dans la zone d'une surface de contact (10 ; 110) entre l'élément antagoniste (7 ; 107) et le support de contre-butée (6 ; 106) une nervure d'ajustage (15; 115) qui s'engage dans un évidement complémentaire de l'élément antagoniste (7 ; 107) ou du support de contre-butée (6 ; 106).

4. Dispositif de verrouillage selon la revendication 3,
**caractérisé en ce que**
la nervure d'ajustage (15 ; 115) est inclinée par rapport au profilé denté (8, 9 ; 108 ; 109).

5. Dispositif de verrouillage selon l'une quelconque des revendications 1 à 4,
**caractérisé en ce qu'**
une fixation de la contre-butée réglable est assurée par des éléments de fixation (18) s'engageant dans la contre-butée (4 ; 104) ou dans son support (6 ; 106) et dans l'élément antagoniste (7 ; 107).

6. Dispositif de verrouillage selon la revendication 5,
**caractérisé en ce que**
les éléments de fixation (18) sont des vis et traversent le support de contre-butée (6 ; 106) ou la contre-butée (4 ; 104).

7. Dispositif de verrouillage selon la revendication 6,
**caractérisé en ce que**
dans la zone des vis, le support de contre-butée (6 ; 106) ou la contre-butée (4 ; 104) présentent des trous oblongs (16 ; 116) dont l'orientation est essentiellement transversale au profilé denté (8 ; 108).

8. Dispositif de verrouillage selon la revendication 7,
**caractérisé en ce que**
les trous oblongs (16 ; 116) sont inclinés par rapport à l'axe vertical, la zone supérieure des trous oblongs étant tournée vers le centre du véhicule et la zone inférieure étant opposée à celui-ci, et la nervure d'ajustage prévue (15 ; 115) le cas échéant s'étend parallèlement à ceux-ci.

9. Dispositif de verrouillage selon l'une quelconque des revendications 1 à 8,
**caractérisé en ce que**
la contre-butée (4) est une nervure essentiellement parallèle à l'axe longitudinal du véhicule et est logée dans un support de contre-butée (6) transversale à celle-ci, le support de contre-butée (6) étant en contact avec l'élément antagoniste le long d'une surface latérale (13).

10. Dispositif de verrouillage selon l'une quelconque des revendications 1 à 9,
**caractérisé en ce que**
la contre-butée (104) est une nervure essentiellement parallèle à l'axe transversal du véhicule et faisant partie intégrante du support de contre-butée (106).
